# EUROPEAN PATENT APPLICATION

(11) **EP 3 745 429 A1**
(43) Date of publication of application: **02.12.2020**
(21) Application number: 19741400.6
(22) Date of filing: 11.01.2019
(51) Int. Cl.: H01C 7/04, H01C 7/00, H01C 17/065

(54) **THERMISTOR, METHOD FOR PRODUCING SAME, AND THERMISTOR SENSOR**

(30) Priority: 22.01.2018 JP 2018008237
(71) Applicant: Mitsubishi Materials Corporation, Tokyo 100-8117 (JP)
(72) Inventor: SUZUKI, Syunpei, Naka-shi, Ibaraki 311-0102 (JP); FUJITA, Toshiaki, Naka-shi, Ibaraki 311-0102 (JP); CHITOSE, Norihisa, Naka-shi, Ibaraki 311-0102 (JP); UOZUMI, Gakuji, Naka-shi, Ibaraki 311-0102 (JP); TAKESHIMA, Kazuta, Naka-shi, Ibaraki 311-0102 (JP); NAGATOMO, Noriaki, Naka-shi, Ibaraki 311-0102 (JP)
(74) Representative: Hoffmann Eitle
(86) International application number: PCT/JP2019/001733
(87) International publication number: WO 2019/142939

(57) **Abstract**

Provided are a thermistor which can have a satisfactory thermistor film using a metal substrate as well as a high humidity resistance and heat resistance; a method for producing the same; and a thermistor sensor. The thermistor according to the present invention includes a metal substrate 2, an insulating base film 3 formed on the metal substrate, and a thermistor film 4 formed on the insulating base film, wherein the insulating base film is formed so as to fill the irregularities on the surface of the metal substrate where the surface roughness of the insulating base film is lower than that of the metal substrate. In the method for producing this thermistor includes the steps of: applying polysilazane on the metal substrate; drying the polysilazane to form the insulating base film of SiOₓ containing nitrogen; and depositing the thermistor film on the insulating base film.

## Description

### BACKGROUND OF THE INVENTION

### Field of the Invention

The present invention relates to a thermistor that can have high humidity resistance, heat resistance, and the like, a method for producing the same, and a thermistor sensor.

### Description of the Related Art

A thermistor material used for a temperature sensor or the like is required to have a high B constant in order to provide a high precision and high sensitivity sensor. In recent years, a metal nitride material having a high B constant has been developed as such a thermistor material, which can be produced without heat treatment such as firing.

For example, the present inventors developed a metal nitride material for a thermistor that can be directly deposited on an insulating substrate without firing, which consists of a metal nitride represented by the general formula: TiₓAl_{y}N_{z} (where 0.70 ≤ y/(x+y) ≤ 0.95, 0.4 ≤ z ≤ 0.5, and x+y+z = 1), wherein the crystal structure thereof is a hexagonal wurtzite-type single phase (Patent document 1). The present inventors also developed other nitride materials of at least one of Ti, V, Cr, Mn, Fe, Co, Ni, Si, Cu, and Al having the crystal structure described above as well as a high B constant which can be deposited without firing (Patent documents 2 to 7).

### [Prior Art Documents]

### [Patent Documents]

[Patent Document 1] Japanese Unexamined Patent Application Publication No. 2013-179161
[Patent Document 2] Japanese Unexamined Patent Application Publication No. 2014-123646
[Patent Document 3] Japanese Unexamined Patent Application Publication No. 2014-236204
[Patent Document 4] Japanese Unexamined Patent Application Publication No. 2015-65408
[Patent Document 5] Japanese Unexamined Patent Application Publication No. 2015-65417
[Patent Document 6] Japanese Unexamined Patent Application Publication No. 2015-73077
[Patent Document 7] Japanese Unexamined Patent Application Publication No. 2015-73075

### SUMMARY OF THE INVENTION

### [Problems to be solved by the Invention]

The following problems still remain in the conventional technologies described above.

Specifically, the metal nitride material for a thermistor disclosed in each Patent document described above is formed on a polyimide film as a flexible substrate, but the polyimide film has a limited humidity resistance, heat resistance, and chemical resistance, and therefore the improvement of these properties is required. Instead of the polyimide film, a metal substrate made of stainless steel or the like may be employed as a substrate that is excellent in these properties. However, the metal nitride material for a thermistor that is directly deposited on the conductive metal substrate cannot ensure electrical insulation. In addition, the metal substrate has a much rougher surface than that of the polyimide film, which precludes the formation of a satisfactory film.

The present invention has been made in view of the aforementioned circumstances, and an object of the present invention is to provide a thermistor that can have a satisfactory thermistor film using a metal substrate as well as a high humidity resistance, heat resistance, and the like; a method for producing the same; and a thermistor sensor.

### [Means for Solving the Problems]

The present invention adopts the following configuration in order to overcome the aforementioned problems. Specifically, a thermistor according to a first aspect of the present invention comprises: a metal substrate; an insulating base film formed on the metal substrate; and a thermistor film formed on the insulating base film, wherein the insulating base film is formed so as to fill the irregularities on the surface of the metal substrate where the surface roughness of the insulating base film is lower than that of the metal substrate.

Since in this thermistor the insulating base film is formed so as to fill the irregularities on the surface of the metal substrate where the surface roughness of the insulating base film is lower than that of the metal substrate, the insulating base film, which can fill the irregularities on the surface of the metal substrate as it can provide a flatter surface than the surface of the metal substrate and can provide sufficient electrical insulation, can ensure that the thermistor film is flat and has a high quality, while the metal substrate can ensure a high humidity resistance, heat resistance, and chemical resistance. In addition, the insulating base film that is deposited on the surface of the metal substrate so as to fill the irregularities on the surface of the metal substrate can provide high adhesion derived from an anchor effect. Moreover, the metal substrate, which has a higher thermal conductivity than that of the polyimide film, can have high thermal conductance to the thermistor film, thereby providing a higher responsivity.

A thermistor according to a second aspect of the present invention is characterized by the thermistor according to the first aspect of the present invention, wherein the metal substrate is made of stainless steel and the insulating base film is a SiOₓ film containing nitrogen.

Specifically, since in this thermistor the metal substrate is made of stainless steel and the insulating base film is a SiOₓ film containing nitrogen atoms, the nitrogen atoms contained in the insulating base film can diffuse to the metal substrate and the thermistor film which contain the nitrogen atoms, thus providing high adhesion.

A thermistor according to a third aspect of the present invention is characterized by the thermistor according to the first or second aspect of the present invention, wherein the metal substrate is a flexible metal thin sheet and the thermistor film is a flexible metal nitride film.

Specifically, since in this thermistor the metal substrate is a flexible metal thin sheet and the thermistor film is a flexible metal nitride film, the thermistor composed of them can be flexible as a whole, which can be easily bent so as to conform to a curved surface or the like and then be installed thereon.

A thermistor according to a fourth aspect of the present invention is characterized by the thermistor according to any one of the first to third aspects of the present invention, wherein the metal substrate is a stainless steel thin sheet and the thermistor film consists of a crystalline M-A-N metal nitride (where "M" represents at least one of Ti, V, Cr, Mn, Fe, Co, Ni, and Cu, and "A" represents Al or (Al and Si)), wherein the crystal structure thereof is a hexagonal wurtzite-type single phase.

Specifically, since in this thermistor the metal substrate is a stainless steel thin sheet and the thermistor film consists of a crystalline M-A-N metal nitride (where "M" represents at least one of Ti, V, Cr, Mn, Fe, Co, Ni, and Cu, and "A" represents Al or (Al and Si)), wherein the crystal structure thereof is a hexagonal wurtzite-type single phase, the combination of the thermistor film of a crystalline M-A-N metal nitride and the metal substrate of a stainless steel thin sheet as described above, both of which have flexibility, can make the thermistor flexible as a whole. For example, when this thermistor is pressed against an object to be measured, it can be flexibly bent so as to make contact with the object to be measured. In addition, even when the object to be measured has a curved surface, the thermistor can make a plane contact with the object to be measured. Thus, the thermistor can have both flexibility and responsivity.

A thermistor sensor according to a fifth aspect of the present invention is characterized by including the metal substrate, the insulating base film, and the thermistor film according to any one of the first to fourth aspects of the present invention, as well as a pair of pattern electrodes formed on the thermistor film.

Specifically, since this thermistor sensor includes the thermistor according to any one of the first to fourth aspects of the present invention, this sensor can also have high humidity resistance, heat resistance, and chemical resistance, as well as thermistor characteristics.

A method for producing a thermistor according to a sixth aspect of the present invention is a method for producing the thermistor according to any one of the first to fourth aspects of the present invention, comprising the steps of: applying polysilazane on the metal substrate; drying the polysilazane to form the insulating base film of a SiOₓ film containing nitrogen; and depositing the thermistor film on the insulating base film.

Specifically, since this method for producing a thermistor includes the step of drying the polysilazane applied on the metal substrate to form the insulating base film of SiOₓ containing nitrogen atoms, the insulating base film of SiOₓ containing the nitrogen atoms having a low surface roughness can be readily obtained. In addition, an insulating base film of a SiOₓ film that is thicker than the thermally-oxidized SiO₂ film can be readily obtained, which can make it easier to fill the irregularities on the surface of the metal substrate.

### [Effects of the Invention]

According to the present invention, the following effects can be provided.

Specifically, according to the thermistor and thermistor sensor of the present invention, since the insulating base film is formed so as to fill the irregularities on the surface of the metal substrate where the surface roughness of the insulating base film is lower than that of the metal substrate, the insulating base film, which has a flatter surface than the surface of the metal substrate and can provide sufficient electrical insulation, can ensure that the thermistor film is flat and has a high quality, while the metal substrate can ensure a high humidity resistance, heat resistance, and chemical resistance.

Therefore, the thermistor and thermistor sensor of the present invention can be used with higher reliability than the conventional ones under the environment having a higher humidity, temperature, and the like.

In addition, since the method for producing a thermistor of the present invention includes the step of drying the polysilazane applied on the metal substrate to form the insulating base film of SiOₓ containing nitrogen atoms, the insulating base film of SiOₓ containing the nitrogen atoms having a low surface roughness can be readily obtained.

### BRIEF DESCRIPTION OF THE DRAWINGS

FIG. 1 shows front and plan views of a thermistor sensor according to one embodiment of the present invention relating to a thermistor, a method for producing the same, and a thermistor sensor.
FIG. 2 is a cross-sectional view taken along the line A-A in FIG. 1.
FIG. 3 is a SEM photograph of a thermistor wherein a thermistor film is formed on a thermally-oxidized SiO₂ film on a Si substrate.
FIG. 4 is a SEM photograph of a thermistor wherein a thermistor film is formed on a SiOₓ film derived from polysilazane on a SUS(stainless steel) substrate.
FIG. 5 is a diagram showing the measurement result of the surface state of a SUS substrate by atomic force microscope (AFM).
FIG. 6 is a diagram showing the measurement result 1 of the surface state of a SiOₓ film derived from polysilazane formed on a SUS substrate by AFM.
FIG. 7 is a diagram showing the measurement result 2 of the surface state of a SiOₓ film derived from polysilazane formed on a SUS substrate by AFM.

### DESCRIPTION OF THE EMBODIMENTS

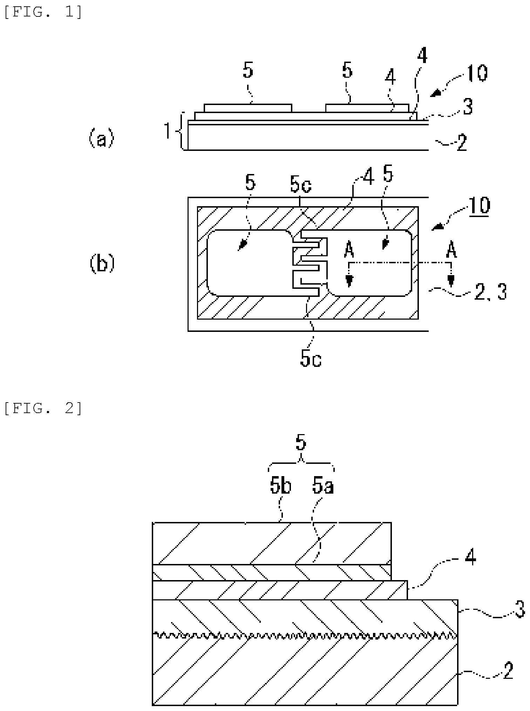

Hereinafter, a thermistor, a method for producing the same, and a thermistor sensor according to one embodiment of the present invention will be described with reference to FIGs. 1 and 2. In the drawings used in the following description, the scale of each component is changed as appropriate so that each component is recognizable or is readily recognized.

As shown in FIG. 1, a thermistor 1 according to the present embodiment includes a metal substrate 2, an insulating base film 3 formed on the metal substrate 2, and a thermistor film 4 formed on the insulating base film 3.

The insulating base film 3 is formed so as to fill the irregularities on the surface of the metal substrate 2. Specifically, the insulating base film 3 is deposited by a thickness capable of filling the irregularities on the surface of the metal substrate 2.

In addition, the surface roughness of the insulating base film 3 is lower than that of the metal substrate 2.

In the present invention, the surface roughness is expressed as the arithmetic average roughness Ra.

The metal substrate 2 is made of stainless steel, and in particular a flexible stainless steel thin sheet is employed when flexibility is required.

Specifically, the metal substrate 2 is a metal thin sheet having flexibility.

In addition, the thermistor film 4 is preferably a metal nitride film having flexibility as well.

The insulating base film 3 is a SiOₓ film containing a trace amount of N(nitrogen). In the present embodiment, the SiOₓ film containing a trace amount of nitrogen element that is formed by drying polysilazane is employed as the insulating base film 3.

The thermistor film 4 consists of a crystalline M-A-N metal nitride (where "M" represents at least one of Ti, V, Cr, Mn, Fe, Co, Ni, and Cu, and "A" represents Al or (Al and Si)), wherein the crystal structure thereof is a hexagonal wurtzite-type single phase. Note that A is Al or (Al and Si), that is, Al or Al and Si which contains at least Al.

In particular, the thermistor film 4 consists of a metal nitride represented by the general formula: MₓAl_{y}N_{z} (where "M" represents at least one of Ti, V, Cr, Mn, Fe, Co, Ni, and Cu; 0.70 ≤ y/(x+y) ≤ 0.98, 0.4 ≤ z ≤ 0.5, x+y+z = 1), wherein the crystal structure thereof is a hexagonal wurtzite-type single phase. Such a film has been proved to have flexibility and satisfactory thermistor characteristics. In addition, the thermistor film 4 may contain oxygen in an amount that may not greatly change the thermistor characteristics.

In fact, Patent documents 1 to 7 disclose wurtzite-type metal nitrides of MₓA_{y}N_{z} (where "M" represents at least one of Ti, V, Cr, Mn, Fe, Co, Ni, and Cu, and "A" represents Al or (Al and Si)) which can exhibit excellent thermistor characteristics. It is also disclosed that the increase of the lattice constant by substituting the Al site of a crystalline Al-N metal nitride with Ti or the like has been confirmed by X-ray data. Note that Patent document 5 discloses that a MₓA_{y}N_{z} metal nitride containing both Al and Si has a wurtzite-type crystal structure and can further exhibit excellent thermistor characteristics.

On the other hand, in the present embodiment, the thermistor film 4 is made of a thermistor material of Ti-Al-N among others. Specifically, this thermistor film 4 consists of a metal nitride represented by the general formula: TiₓAl_{y}N_{z} (where 0.70 ≤ y/ (x+y) ≤ 0.95, 0.4 ≤ z ≤ 0.5, and x+y+z = 1), wherein the crystal structure thereof is a hexagonal wurtzite-type single phase.

Next, a method for producing the thermistor 1 according to the present embodiment will be described.

The method for producing the thermistor 1 according to the present embodiment includes the steps of applying polysilazane on the metal substrate 2, drying the polysilazane to form the insulating base film 3 of SiOₓ containing nitrogen, and depositing the thermistor film 4 on the insulating base film 3.

In the step of applying the polysilazane as described above, AQUAMICA® manufactured by Merck & Co. is used as the polysilazane for example, and the polysilazane is applied on the metal substrate 2 of a stainless steel thin sheet by a spin coater at 750 revolutions for 30 seconds two times.

Then, the applied polysilazane is dried in the atmosphere at 150°C for 30 minutes to form the insulating base film 3 of SiOₓ containing a trace amount of nitrogen element.

Unlike sol-gel-based materials, the polysilazane described above contains no organic component, and hence has a chemical composition of only inorganic components having a molecular structure represented by the following chemical formula. In this molecular structure, at least any one of R1, R2, and R3 is hydrogen.

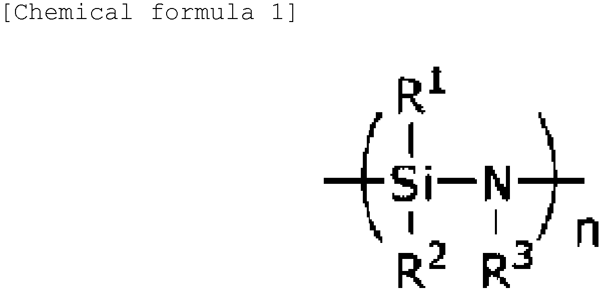

The degree of polymerization n of the polysilazane is 100 to 50000, and the polysilazane can react with moisture in the atmosphere to convert into silica glass(SiO₂) according to the following reaction formula without being heated.

[Reaction formula] (SiH₂NH)+2H₂O -> (SiO₂)+NH₃+2H₃

Next, the thermistor film 4 is deposited by sputtering on the formed insulating base film 3.

In this step of depositing the thermistor film 4, for example, when the crystalline Ti-Al-N insulating film is formed by sputtering, the thermistor film 4 at a Ti-Al-N(Al/(Al+Ti) ratio of 0.85 having a film thickness of 100 nm is deposited by a reactive sputtering method, using a Ti-Al alloy sputtering target in a nitrogen-containing atmosphere. This sputtering is performed under the following conditions: an ultimate vacuum: 4×10⁻⁵ Pa, a sputtering gas pressure: 0.25 Pa, a target input power(output): 200 W, and a nitrogen gas partial pressure under a mixed gas (Ar gas + nitrogen gas) atmosphere: 30%.

Next, a thermistor sensor including the thermistor 1 according to the present embodiment will be described. As shown in FIG. 1, this thermistor sensor 10 includes the metal substrate 2, the insulating base film 3, and the thermistor film 4 which are included in the thermistor 1, as well as a pair of pattern electrodes 5 formed on the thermistor film 4.

The pair of pattern electrodes 5 is patterned using, for example, stacked metal films of a Cr film 5a (thickness: 20 nm) and a Au film 5b (thickness: 200 nm) so as to be arranged opposite to each other on the thermistor film 4 and to have a comb shaped pattern with a plurality of comb portions 5c.

As described above, in the thermistor 1 according to the present embodiment, since the surface roughness of the insulating base film 3 is lower than that of the metal substrate 2, the insulating base film 3, which can fill the irregularities on the surface of the metal substrate 2 as it can provide a flatter surface than the surface of the metal substrate 2 and can provide sufficient electrical insulation, can ensure that the thermistor 4 film is flat and has a high quality, while the metal substrate 2 can ensure a high humidity resistance, heat resistance, and chemical resistance. In addition, the insulating base film 3 that is deposited so as to fill the irregularities on the surface of the metal substrate 2 can provide high adhesion derived from an anchor effect. Moreover, the metal substrate 2, which has a higher thermal conductivity than that of the polyimide film, can have high thermal conductance to the thermistor film 4, thereby providing a higher responsivity.

In addition, since the metal substrate 2 is made of stainless steel and the insulating base film 3 is a SiOₓ film containing nitrogen, the nitrogen element contained in the insulating base film 3 can diffuse into the metal substrate 2 and the thermistor film 4 which contain nitrogen element, thus providing high adhesion.

In addition, since the metal substrate 2 is a flexible metal thin sheet and the thermistor film 4 is a flexible metal nitride film, the thermistor composed of them can be flexible as a whole, which can be easily bent so as to conform to a curved surface or the like and then be installed thereon.

In particular, when the metal substrate 2 is a stainless steel thin sheet and the thermistor film 4 consists of a crystalline M-A-N metal nitride (where "M" represents at least one of Ti, V, Cr, Mn, Fe, Co, Ni, and Cu, and "A" represents Al or (Al and Si)), wherein the crystal structure thereof is a hexagonal wurtzite-type single phase, the combination of the thermistor film 4 of a crystalline M-A-N metal nitride and the metal substrate 2 of a stainless steel thin sheet, both of which have flexibility as described above, can make the thermistor 1 flexible as a whole.

For example, when this thermistor 1 is pressed against an object to be measured, it can be flexibly bent so as to make contact with the object to be measured. In addition, even when the object to be measured has a curved surface, the thermistor 1 can make a plane contact with the object to be measured. Thus, the thermistor 1 can have both flexibility and responsivity.

As described above, since the thermistor sensor 10 according to the present embodiment includes the thermistor 1, the thermistor sensor can have high humidity resistance, heat resistance, and chemical resistance, as well as a satisfactory thermistor characteristics.

In addition, the method for producing the thermistor 1 according to the present embodiment includes the step of drying the polysilazane applied on the metal substrate 2 to form the insulating base film 3 of SiOₓ containing nitrogen, the insulating base film 3 of SiOₓ containing nitrogen having a low surface roughness can be readily obtained. In addition, the insulating base film 3 of a SiOₓ film that is thicker than the thermally-oxidized SiOₓ film can be readily obtained, which makes it easier to fill the irregularities on the surface of the metal substrate 2.

The followings are the results of comparison between the metal substrate 2 of stainless steel and the substrate of a polyimide film for the humidity resistance, heat resistance, chemical resistance, and responsivity.

### [Humidity resistance]

The water vapor transmission rate and the water absorption coefficient of the polyimide film are 1.7×10⁻³ kg/m² and 0.8 to 1.5%, respectively, whereas the water vapor transmission rate and water absorption coefficient of the metal substrate 2 of stainless steel are significantly lowered, thereby providing a high humidity resistance.

### [Heat resistance]

The heat resistant life of the polyimide film is 2000 hours or more at 270°C, whereas the metal substrate 2 of stainless steel has a heat resistance of 900°C or more.

### [Chemical resistance]

When the polyimide film is immersed in a caustic soda solution, the strength retention and elongation retention are decreased by 20% or more thereby allowing electrolyte to penetrate therethrough, whereas the metal substrate 2 of stainless steel has no problem that the electrolyte penetrates therethrogh.

### [Response speed]

The thermal conductivity of the polyimide film is 0.29 W/m·K, whereas the thermal conductivity of the metal substrate 2 of stainless steel is 10 to 25 W/m·K, which can allow heat to be rapidly transferred to the thermistor film 4, therefore improving the response speed.

### [Example]

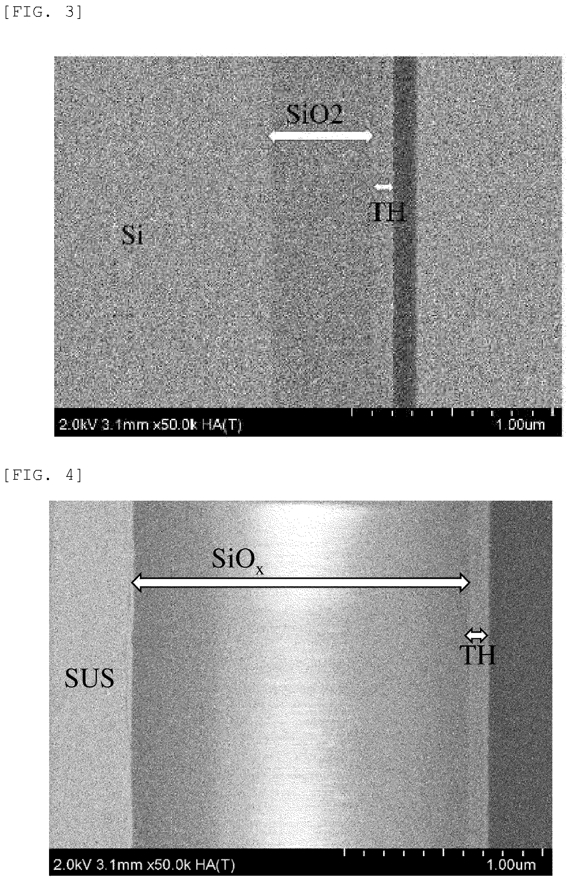

A thermistor was produced according to the Example of the present invention by forming an insulating base film of SiOₓ derived from polysilazane on a metal substrate of stainless steel and further forming a Ti-Al-N thermistor film thereon. FIG. 3 shows the observation result of the cross section of this thermistor according to the Example by SEM. "TH" in the figure represents the thermistor. A thermistor according to the Comparative Example was also produced by forming a thermally-oxidized SiO₂ film on a Si substrate and further forming a Ti-Al-N thermistor film thereon. FIG. 4 shows the observation result of this thermistor by SEM conducted in a similar way.

The thickness of the metal substrate of stainless steel described above is 30 µm, while the thickness of the insulating base film described above is 2 µm. In addition, according to the Comparative Example, the thickness of the Si substrate of the thermistor is 255 µm, while the thickness of the thermally-oxidized SiOₓ film is 0.5 µm. Moreover, the thickness of both of the thermistor films is 100 nm.

As can be seen from these results, in the thermistor according to the Example of the present invention, since the insulating base film of SiOₓ derived from polysilazane is deposited so as to fill the irregularities on the surface of the metal substrate of stainless steel in a sufficient embedded manner, the surface of the insulating base film is more flattened. In addition, the insulating base film of SiOₓ derived from polysilazane in the thermistor according to the Example of the present invention and the thermally-oxidized SiOₓ film in the thermistor according to the Comparative Example of the present invention are both amorphous and have a similar dense structure.

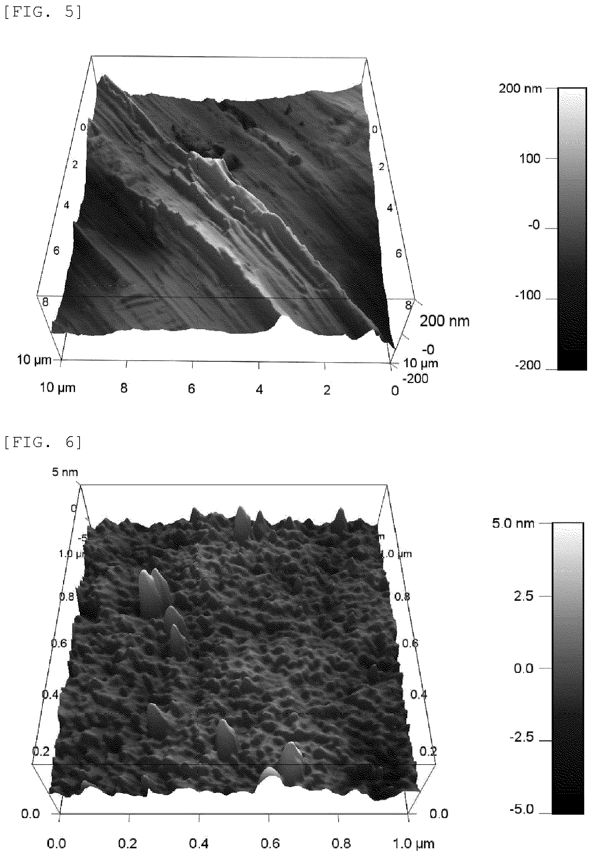

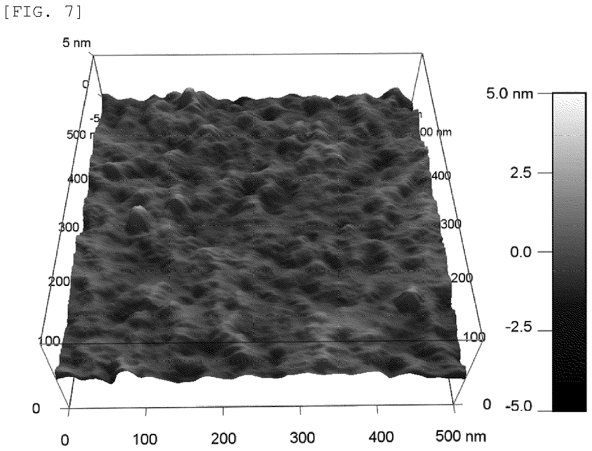

The measurement results of the surface state and surface roughness of an insulating base film of SiOₓ derived from polysilazane that is formed on a metal substrate of stainless steel by atomic force microscope(AFM) are shown in FIG. 6 (measurement 1) and FIG. 7 (measurement 2). The measurement result of the surface state and surface roughness of a metal substrate of stainless steel by AFM before deposition is also shown in FIG. 5.

As can be seen from these results, the surface of the metal substrate of stainless steel has a surface roughness Ra of 34.791 nm (Max: 169.866 nm, Min: -129.354 nm) with the maximum roughness being about 300 nm (Max-Min), whereas the surface of the insulating base film of SiOₓ derived from polysilazane in the thermistor according to the Example of the present invention has a surface roughness Ra of 538.3 pm (Max: 6.133 nm, Min: -2.456 nm) in the measurement 1 and a surface roughness Ra of 345.2 pm (Max: 2.188 nm, Min: -1.270 nm) in the measurement 2, which means that the surface roughness has been significantly lowered.

The technical scope of the present invention is not limited to the aforementioned embodiment and Example, but the present invention may be modified in various ways without departing from the scope or teaching of the present invention.

For example, as described above, the SiOₓ film containing nitrogen that is deposited using polysilazane is preferably used as the insulating base film. However, a SiOₓ film such as SiO₂ film or the like that is deposited by a sputtering method or a sol-gel method may also be employed as the insulating base film.

### [Reference Numerals]

1: thermistor, 2: metal substrate, 3: insulating base film, 4: thermistor film, 5: pattern electrodes, 10: thermistor sensor

## Claims

1. A thermistor comprising:
a metal substrate;
an insulating base film formed on the metal substrate; and
a thermistor film formed on the insulating base film,
wherein the insulating base film is formed so as to fill the irregularities on the surface of the metal substrate, and
wherein the surface roughness of the insulating base film is lower than that of the metal substrate.

2. The thermistor according to claim 1,
wherein the metal substrate is made of stainless steel, and
wherein the insulating base film is a SiOₓ film containing nitrogen.

3. The thermistor according to claim 1,
wherein the metal substrate is a flexible metal thin sheet, and
wherein the thermistor film is a flexible metal nitride film.

4. The thermistor according to claim 1,
wherein the metal substrate is a stainless steel thin sheet, and
wherein the thermistor film is a crystalline M-A-N metal nitride (where "M" represents at least one of Ti, V, Cr, Mn, Fe, Co, Ni, and Cu, and "A" represents Al or (Al and Si)), wherein the crystal structure thereof is a hexagonal wurtzite-type single phase.

5. A thermistor sensor comprising:
the metal substrate, the insulating base film, and the thermistor film which are included in the thermistor according to claim 1, and
a pair of pattern electrodes formed on the thermistor film.

6. A method for producing the thermistor according to claim 1 comprising the steps of:
applying polysilazane on the metal substrate;
drying the polysilazane to form the insulating base film of SiOₓ containing nitrogen; and
depositing the thermistor film on the insulating base film.
